# EUROPÄISCHE PATENTANMELDUNG

(11) **EP 1 276 341 A1**
(43) Veröffentlichungstag der Anmeldung: **15.01.2003**
(21) Anmeldenummer: 01116956.2
(22) Anmeldetag: 11.07.2001
(51) Int. Cl.: H04Q 7/38

(54) **Verfahren zum Lokalisieren einer Mobilstation, lokalisierbare Mobilstation, Hilfsmittel zum Lokalisieren von Mobilstationen und Basisstation für ein Mobilfunknetz**

(71) Anmelder: SIEMENS AKTIENGESELLSCHAFT, 80333 München (DE)
(72) Erfinder: Faerber, Michael, 82515 Wolfratshausen (DE); Stark, Thomas, 81476 München (DE)

(57) **Zusammenfassung**

Die Erfindung betrifft ein Verfahren zum Lokalisieren einer Mobilstation (10), die dazu ausgelegt ist, Dienste eines Mobilfunknetzes zu nutzen, indem sie Daten (14) mit zumindest einer Basisstation (12) des Mobilfunknetzes austauscht.

Erfindungsgemäß ist vorgesehen, dass zum Lokalisieren der Mobilstation (10) Zusatzdaten (16) herangezogen werden, die ihren Ursprung unabhängig von den Basisstationen (12) im Bereich (18) der momentanen Position der Mobilstation (10) haben.

Weiterhin betrifft die Erfindung eine lokalisierbare Mobilstation (10), Hilfsmittel (20) zum Lokalisieren von Mobilstationen (10) sowie eine Basisstation (12) für ein Mobilfunknetz, wobei diese Vorrichtungen insbesondere zur Durchführung des erfindungsgemäßen Verfahrens vorgesehen sind.

## Beschreibung

Die vorliegende Erfindung betrifft ein Verfahren zum Lokalisieren einer Mobilstation, die dazu ausgelegt ist, Dienste eines Mobilfunknetzes zu nutzen, indem sie Daten mit zumindest einer Basisstation des Mobilfunknetzes austauscht. Weiterhin betrifft die vorliegende Erfindung eine lokalisierbare Mobilstation, die dazu ausgelegt ist, Dienste eines Mobilfunknetzes zu nutzen, indem sie Daten mit zumindest einer Basisstation des Mobilfunknetzes austauscht, wobei die Position der Mobilstation von dem Mobilfunknetz zugeordneten Zuordnungsmitteln anhand von Zusatzdaten bestimmt werden kann. Die Erfindung betrifft auch Hilfsmittel zum Lokalisieren von Mobilstationen, die dazu ausgelegt sind, Dienste eines Mobilfunknetzes zu nutzen, indem sie Daten mit zumindest einer Basisstation des Mobilfunknetzes austauschen. Weiterhin betrifft die Erfindung eine Basisstation für ein Mobilfunknetz.

Das gattungsgemäße Verfahren sowie die gattungsgemäßen Vorrichtungen werden im Zusammenhang mit Mobilfunknetzen eingesetzt, die standortbezogene Dienste anbieten. Unter standortbezogenen Diensten versteht man Dienste, die in Abhängigkeit vom momentanen Aufenthaltsort eines Benutzers einer Mobilstation variieren. Als standortbezogene Dienste kommen beispielsweise Auskunftsdienste, die dem Teilnehmer Informationen über örtlich nahe gelegene Einrichtungen übermitteln, Flottensteuerungen beispielsweise für Taxileitstellen und Speditionen, Navigationsdienste, Personensuchdienste, Sicherheits- und Rettungsdienste und Tarif-Applikationen in Betracht, mit denen der Netzbetreiber beispielsweise ortsspezifische Tarife einräumen kann. Voraussetzung für den Einsatz von standortbezogenen Diensten ist, dass die die standortbezogenen Dienste nutzenden Mobilstationen lokalisierbar sind. Zur Lokalisierung der Mobilstationen sind beispielsweise im Zusammenhang mit dem GSM (Global System for Mobile Communications) bereits mehrere Verfahren beziehungsweise Systeme bekannt.

Ein bekanntes Verfahren ist das sogenannte Cell-Id/TA-Verfahren, bei dem die Position der Mobilstation über eine Zellenidentifizierung (Cell-Id) beziehungsweise eine zeitliche Vorverlegung (TA = Timing Advance) des Sendebursts der Mobilstation bestimmt wird. Die zeitliche Vorverlegung des Sendebursts wird dabei üblicherweise eingesetzt, um sicherzustellen, dass die Mobilstation ihr Datenpaket vor Beginn eines Empfangszeitschlitzes an die Basisstation absendet, damit dieses dort innerhalb des Empfangsfensters eintrifft. Die zeitliche Vorverlegung des Sendebursts TA wird in der Regel als Anzahl von Bitzeiten angegeben. TA wird im Normalfall von der Basisstation ermittelt und der Mobilstation vorgegeben. Der Wert von TA enthält somit Informationen über den Abstand zwischen Mobilstation und Basisstation und kann zur Lokalisierung der Mobilstation herangezogen werden. Ein Nachteil des Cell-Id/TA-Verfahrens besteht darin, dass sich bei großen Zellen Ungenauigkeiten im Kilometerbereich ergeben.

Weiterhin ist das sogenannte E-OTD-System (Enhanced Observed Time Difference System / verbessertes System zur Auswertung beobachteter Zeitunterschiede) bekannt, das es erlaubt, die momentane Position der Mobilstation anhand der Laufzeiten von Funksignalen von der Mobilstation zu Basisstationen zu bestimmen. Ein Nachteil des E-OTD-Systems besteht darin, dass die Mobilstation in der Regel eine gute Verbindung zu mindestens drei Basisstationen haben muss, damit eine Lokalisierung möglich ist. Weiterhin dürfen bei diesem System keine Repeater verwendet werden.

Auch der Einsatz des GPS (Global Positioning System / globales Positioniersystem) zur Lokalisierung von Mobilstationen ist bekannt. Beim GPS handelt es sich um ein satellitengestütztes Navigationssystem, bei dem Satelliten Mikrowellen aussenden, die am Boden von einem GPS-Empfänger empfangen werden. Die Strecke zwischen der momentanen Position des GPS-Empfängers und den Satelliten wird dabei über die Messung der Signallaufzeiten ermittelt. Die Verwendung eines GPS-Empfängers in einer Mobilstation erlaubt bereits eine sehr genaue Lokalisierung beziehungsweise Positionierung, wenn die erforderliche Anzahl von Satelliten empfangen werden kann. Dies ist jedoch beispielsweise nicht der Fall, wenn sich die Mobilstation beziehungsweise der GPS-Empfänger zwischen Hochhäusern, in dichtem Wald, innerhalb geschlossener Räume, etc. befindet. In solchen Situationen ist eine Lokalisierung mittels GPS nur eingeschränkt oder überhaupt nicht möglich.

Der Erfindung liegt die **Aufgabe** zugrunde, die gattungsgemäßen Verfahren und Vorrichtungen derart weiterzubilden, dass eine sehr genaue Lokalisierung von Mobilstationen auch in Fällen möglich wird, in denen die bekannten Verfahren und Systeme keine befriedigenden Ergebnisse liefern.

Diese Aufgabe wird durch die in den unabhängigen Ansprüchen angegebenen Merkmale gelöst.

Vorteilhafte Ausgestaltungen und Weiterbildungen der Erfindung ergeben sich aus den Unteransprüchen.

Das erfindungsgemäße System baut auf dem gattungsgemäßen Stand der Technik dadurch auf, dass zum Lokalisieren der Mobilstation Zusatzdaten herangezogen werden, die ihren Ursprung unabhängig von den Basisstationen im Bereich der momentanen Position der Mobilstation haben. Dadurch, dass die Zusatzdaten ihren Ursprung im Bereich der momentanen Position der Mobilstation haben (der Abstand zwischen Ursprung und Mobilstation kann je nach Ausführungsform wenige Millimeter bis einige 100 Meter betragen) können die Zusatzdaten erzeugt werden, ohne dass Satelliten empfangen werden müssen und vorzugsweise sogar dann, wenn die Mobilstation momentan keine Verbindung zu einer Basisstation hat. Die Genauigkeit der Lokalisierung kann dabei in einfacher Weise beeinflusst werden, indem verschiedene Ursprünge für Zusatzdaten mit einer mehr oder weniger großen räumlichen Dichte vorgesehen werden.

Das erfindungsgemäße Verfahren sieht vorzugsweise vor, dass die Zusatzdaten über von den Basisstationen unabhängige ortsfeste Hilfsmittel gewonnen werden. Dabei kann beispielsweise eine Vielzahl von ortsfesten Hilfsmitteln innerhalb eines einzigen Gebäudes vorgesehen werden, zum Beispiel in jedem Stockwerk, benachbart zu den Aufzugstüren. Auf diese Weise kann nicht nur festgestellt werden, in welchem Gebäude sich die Mobilstation momentan befindet, sondern auch in welchem Stockwerk, wodurch der Einsatz von stockwerkbezogenen Diensten möglich wird. Selbstverständlich kann ebenfalls vorgesehen sein, entsprechende Hilfsmittel im Freien zu installieren, beispielsweise an Gebäuden, Straßenlaternen usw.

Das erfindungsgemäße Verfahren kann weiterhin vorsehen, dass die Hilfsmittel einen Code umfassen. Beispielsweise können die Hilfsmittel durch Barcode-Aufkleber gebildet sein, wobei der Positionsinformationen enthaltende Barcode über einen in der Mobilstation integrierten Barcodeleser eingelesen werden kann. Dabei sind Ausführungsformen möglich, bei denen die über den Code gewonnenen Zusatzdaten zur Lokalisierung der Mobilstation ausreichen, oder Ausführungsformen, bei denen hierzu weitere Informationen erforderlich sind, beispielsweise eine Zellenidentifikationsnummer oder dergleichen. Die zuletzt erwähnten Ausführungsformen bieten sich beispielsweise an, wenn in unterschiedlichen Zellen Hilfsmittel vorgesehen werden, die den gleichen Code aufweisen.

Vorzugsweise sieht das erfindungsgemäße Verfahren vor, dass die Hilfsmittel und/oder die Mobilstation eine Schnittstelle aufweisen, über die ein Datenaustausch zwischen der Mobilstation und den Hilfsmitteln möglich ist. Der Begriff Datenaustausch umfasst in diesem Zusammenhang sowohl eine ein- als auch eine bidirektionale Datenübertragung. Dabei kommen auch Ausführungsformen in Betracht, bei denen der Benutzer der Mobilstation die Schnittstelle mitbildet, beispielsweise indem er einen abgelesenen Code über eine Tastatur in die Mobilstation eingibt.

In diesem Zusammenhang kann das erfindungsgemäße Verfahren vorsehen, dass die Schnittstelle eine Funkschnittstelle, insbesondere eine Bluetooth-Schnittstelle, und/oder eine optische Schnittstelle, insbesondere eine Infrarot-Schnittstelle, und/oder einen Codeleser, insbesondere einen Barcodeleser, und/oder eine Tastatur umfasst. Dadurch ist es beispielsweise möglich, dass die Mobilstation aktiv mögliche Frequenzen nach potentiell vorhandenen Hilfsmittelsignalen absucht und die Hilfsmittel nach der Detektion kontaktiert. Zusätzlich oder alternativ kann der Benutzer der Mobilstation an Straßenlaternen, Gebäudeeingängen, Fahrstuhlausgängen usw. vorgesehene Positionsinformationen einscannen. Im Falle von Infrarot-Schnittstellen (IR-Schnittstellen) kann die Mobilstation beispielsweise Hilfsmittel in Form von Einrichtungen erfassen, die speziell als Location-Marker mit Infrarot-Schnittstelle dienen, oder Hilfsmittel in Form von anderen Einrichtungen stationären Charakters, die über die vorhandene Infrarot-Schnittstelle zusätzlich als Location-Marker dienen.

Zusätzlich oder alternativ kann das erfindungsgemäße Verfahren vorsehen, dass die Mobilstation passive System aufweist, die dazu vorgesehen sind, Hilfsmittel bei einer Annäherung zu kontaktieren. Bei den passiven Systemen kann es sich beispielsweise um OFW- (Oberflächenwellen-) Bauelemente, insbesondere OFW-Pads handeln. OFW-Bauelemente sind elektroakustische Wandler, die elektromagnetische Wellen empfangen, für einige Mikrosekunden akustisch Zwischenspeichern und anschließend wieder aussenden. Die passiven Systemen können die Hilfsmittel bei einer Annäherung beispielsweise dazu veranlassen, ihrerseits die identifizierten Mobilstationen zu kontaktieren oder beispielsweise über leitungsgebundene Wege das Mobilfunknetz mit Zusatzdaten zu versorgen, die Positionsinformationen enthalten oder mit deren Hilfe Positionsinformationen erzeugt werden können.

Bei bestimmten Ausführungsformen des erfindungsgemäßen Verfahrens ist vorgesehen, dass die Mobilstation die Zusatzdaten zumindest teilweise an das Mobilfunknetz überträgt. Diese Übertragung kann beispielsweise über eine Basisstation erfolgen, um es Zuordnungsmitteln des Mobilfunknetzes zu ermöglichen, die Mobilstation anhand der Zusatzdaten zu lokalisieren.

Zusätzlich oder alternativ kann das erfindungsgemäße Verfahren vorsehen, dass die Hilfsmittel die Zusatzdaten zumindest teilweise an das Mobilfunknetz übertragen. Dabei kann die Übertragung der Zusatzdaten, beispielsweise in Abhängigkeit vom Installationsort der Hilfsmittel, über das Mobilfunknetz und/oder leitungsgebunden erfolgen.

Bei bevorzugten Ausführungsformen sieht das erfindungsgemäße Verfahren vor, dass eine oder mehrere Basisstationen Informationen über im Bereich der momentanen Position der Mobilstation vorhandene Hilfsmittel an die Mobilstation übermitteln. Beispielsweise kann eine Basisstation über Broadcast-Kanäle Informationen verteilen, die Frequenzen etc. betreffen, auf denen eine Kontaktaufnahme zu Hilfsmitteln mit Bluetooth-Schnittstelle möglich ist. Es sind jedoch ebenfalls Ausführungsformen möglich, bei denen die Informationen lediglich angeben, dass in der jeweiligen Zelle überhaupt Hilfsmittel vorgesehen sind.

Das erfindungsgemäße Verfahren kann vorsehen, dass die Zusatzdaten Aktualitätsinformationen enthalten. Derartige Aktualitätsinformationen, beispielsweise in Form von Zeitstempeln, können insbesondere relevant sein, wenn von der Mobilstation zum Mobilfunknetz zu übertragende Zusatzdaten erzeugt werden, ohne dass momentan eine Verbindung zu einer Basisstation besteht.

Insbesondere in diesem Zusammenhang kann das erfindungsgemäße Verfahren vorsehen, dass die Zusatzdaten vor der Übermittlung an das Mobilfunknetz zwischengespeichert werden. Sofern vorgesehen ist, dass die Zusatzdaten zumindest teilweise von der Mobilstation zu dem Mobilfunknetz übertragen werden, weist die Mobilstation zu diesem Zweck geeignete Speichermittel auf. In Fällen, in denen vorgesehen ist, dass die Zusatzdaten zumindest teilweise von den Hilfsmitteln zu dem Mobilfunknetz übertragen werden, weisen die Hilfsmittel geeignete Speichermittel auf.

Im Zusammenhang mit dem erfindungsgemäßen Verfahren kann weiterhin vorgesehen sein, dass das Mobilfunknetz Zuordnungsmittel umfasst, die der Mobilstation unter Verwendung der Zusatzdaten eine eindeutige Position zuordnen. Diese Zuordnungsmittel können beispielsweise durch ein SMLC (Serving Mobile Location Center) gebildet sein, das eine Datenbank umfasst, mit deren Hilfe einer Mobilstation anhand der übermittelten Zusatzdaten und gegebenenfalls weiterer Daten, beispielsweise einer Cell-Id beziehungsweise einer Zellenidentifizierung, eine Position zugeordnet werden kann. Das SMLC wirkt vorzugsweise mit einem GMLC (Gateway Mobile Location Center) zusammen, das externe Applikationen und Server mit den Positionsdaten der Mobilstationen versorgt, jedoch die Vertraulichkeit dieser Daten durch geeignete Authentifizierungsalgorithmen gewährleistet.

Die erfindungsgemäße lokalisierbare Mobilstation baut auf dem gattungsgemäßen Stand der Technik dadurch auf, dass sie eine Schnittstelle aufweist, über die ihr Zusatzdaten zugeführt werden können, die ihren Ursprung unabhängig von den Basisstationen im Bereich der momentanen Position der Mobilstation haben, und/oder über die zur Gewinnung der Zusatzdaten ein Datenaustausch mit von den Basisstationen unabhängigen ortsfesten Hilfsmitteln möglich ist, die im Bereich der momentanen Position der Mobilstation vorgesehen sind. Die Zusatzdaten werden vorzugsweise zu dem Mobilfunknetz übertragen und dort ausgewertet. Die momentane Position der erfindungsgemäßen lokalisierbaren Mobilstation kann auch in Fällen mit großer Genauigkeit bestimmt werden, in denen dies beim Stand der Technik nicht möglich war. Die erfindungsgemäß vorgesehene Schnittstelle kann zusätzlich auch zu anderen Zwecken herangezogen werden, beispielsweise zum Datenaustausch mit EDV-Einrichtungen.

In diesem Zusammenhang kann bei der erfindungsgemäßen lokalisierbaren Mobilstation vorgesehen sein, dass die Schnittstelle eine Funkschnittstelle, insbesondere eine Bluetooth-Schnittstelle, und/oder eine optische Schnittstelle, insbesondere eine Infrarot-Schnittstelle, und/oder einen Codeleser, insbesondere einen Barcodeleser, und/oder eine Tastatur umfasst. Wie dies bereits im Zusammenhang mit dem erfindungsgemäßen Verfahren erläutert wurde, ist es dadurch beispielsweise möglich, dass die Mobilstation aktiv mögliche Frequenzen nach potentiell vorhandenen Hilfsmittelsignalen absucht und die Hilfsmittel nach der Detektion kontaktiert. Über die Schnittstelle kann der Benutzer der Mobilstation an Straßenlaternen, Gebäudeeingängen, Fahrstuhlausgängen und so weiter vorgesehene Positionsinformationen in die Mobilstation übertragen. Im übrigen wird auf die entsprechenden Ausführungen im Zusammenhang mit dem erfindungsgemäßen Verfahren verwiesen.

Zusätzlich oder alternativ kann im Zusammenhang mit der erfindungsgemäßen lokalisierbaren Mobilstation vorgesehen sein, dass sie passive Systeme aufweist, die dazu vorgesehen sind, Hilfsmittel bei einer Annäherung zu kontaktieren. Bei den passiven Systemen kann es sich beispielsweise wieder um die bereits erwähnten OFW- (Oberflächenwellen-) Bauelemente handeln, insbesondere um OFW-Pads. Wie bereits im Zusammenhang mit dem erfindungsgemäßen Verfahren erläutert, können die passiven Systemen die Hilfsmittel bei einer Annäherung beispielsweise dazu veranlassen, ihrerseits die identifizierten Mobilstationen zu kontaktieren oder beispielsweise über leitungsgebundene Wege das Mobilfunknetz mit Zusatzdaten zu versorgen, die Positionsinformationen enthalten oder mit deren Hilfe Positionsinformationen erzeugt werden können.

Die erfindungsgemäßen Hilfsmittel zum Lokalisieren von Mobilstationen bauen auf dem gattungsgemäßen Stand der Technik dadurch auf, dass die Hilfsmittel dazu vorgesehen sind, stationär im Bereich von potentiellen Aufenthaltsorten von Mobilstationen angeordnet zu werden, und dass sie von einem Datenaustausch zwischen der Mobilstation und einer Basisstation unabhängige Zusatzdaten liefern, die dazu vorgesehen sind, zur Lokalisierung einer Mobilstation herangezogen zu werden. Die erfindungsgemäßen Hilfsmittel können im einfachsten Fall beispielsweise durch Aufkleber gebildet sein, auf denen ein Code vorgesehen ist, beispielsweise ein Barcode, der die Zusatzdaten enthält, über die beispielsweise ein SMLC (Serving Mobile Location Center) die Position der Mobilstation bestimmen kann. Es sind jedoch ebenfalls Ausführungsformen möglich, bei denen die Hilfsmittel durch aufwendigere technische Einrichtungen gebildet sind, die selbstständig Daten mit Mobilstationen austauschen können. Den erfindungsgemäßen Hilfsmitteln ist jedoch gemeinsam, dass sie dazu vorgesehen sind stationär und unabhängig von Basistationen im Bereich von potentiellen Aufenthaltsorten von Mobilstationen angeordnet beziehungsweise befestigt zu werden. Dieser Bereich kann dabei beispielsweise von einigen Millimetern bis zu einigen 100 Metern betragen, je nach Art der Hilfsmittel. Um Vorteile gegenüber einer Lokalisierung über eine Zellenidentifizierung zu erzielen, muss der Bereich jedoch kleiner als eine Zelle sein.

Im Zusammenhang mit dem erfindungsgemäßen Hilfsmitteln kann weiterhin vorgesehen sein, dass sie eine Schnittstelle aufweisen, die dazu vorgesehen ist, Daten mit Mobilstationen auszutauschen. Der Begriff Datenaustausch ist im Rahmen der vorliegenden Erfindung wie erwähnt so aufzufassen, dass er sowohl ein- als auch bidirektionale Datenübertragungen umfasst.

Dabei können die erfindungsgemäßen Hilfsmittel weiterhin vorsehen, dass die Schnittstelle eine Funkschnittstelle, insbesondere eine Bluetooth-Schnittstelle, und/oder eine optische Schnittstelle, insbesondere eine Infrarot-Schnittstelle, umfasst. Auf die entsprechenden Ausführungen im Zusammenhang mit dem erfindungsgemäßen Verfahren und der erfindungsgemäßen Mobilstation wird verwiesen. Selbstverständlich ist es ebenfalls denkbar, dass die Hilfsmittel einen Codeleser, insbesondere einen Barcodeleser, aufweisen und dass die Mobilstation den entsprechenden Code liefert.

Bei bestimmten Ausführungsformen der erfindungsgemäßen Hilfsmittel kann vorgesehen sein, dass sie dazu ausgelegt sind, die Zusatzdaten an ein Mobilfunknetz zu übermitteln. Die Übermittlung der Zusatzdaten kann dabei über Funkverbindungen und/oder leitungsgebundene Verbindungen erfolgen.

Die erfindungsgemäße Basisstation für ein Mobilfunknetz baut auf dem gattungsgemäßen Stand der Technik dadurch auf, dass sie dazu ausgelegt ist, Informationen über in ihrem Sende/Empfangsbereich angeordnete erfindungsgemäße Hilfsmittel an Mobilstationen zu übermitteln, die sich in ihrem Sende/Empfangsbereich befinden. In diesem Zusammenhang kann es vorteilhaft sein, dass das Mobilfunknetz zunächst die ungefähre Position der Mobilstation erfasst, zum Beispiel über das eingangs erwähnte E-OTD-System. Sofern eine derartige ungefähre Lokalisierung der Mobilstation beispielsweise ergibt, dass sich die Mobilstation in einem Hochhaus befindet, in dem weitere Hilfsmittel zum Lokalisieren von Mobilstationen vorgesehen sind, kann die erfindungsgemäße Basisstation die Mobilstation über das Vorhandensein dieser Hilfsmittel in Kenntnis setzen. Sofern die Hilfsmittel mit Infrarot-Schnittstellen ausgestattet sind, kann die Basisstation die Aktivierung einer der Mobilstation zugeordneten Infrarot-Schnittstelle veranlassen, damit ein automatischer Datenaustausch zwischen Mobilstation und Hilfsmitteln erfolgen kann. Auf diese Weise lässt sich beispielsweise das Stockwerk bestimmen, in dem sich die Mobilstation momentan befindet.

Die vorliegende Erfindung kann bei allen Arten von bestehenden und zukünftigen Mobilfunknetzen alternativ oder zusätzlich zu bekannten Lokalisierungsverfahren eingesetzt werden. Je nach räumlicher Dichte der Hilfsmittel kann eine praktisch beliebige Genauigkeit der Lokalisierung der Mobilstationen erzielt werden.

Die Erfindung wird nachfolgend anhand von in den Zeichnungen dargestellten Ausführungsbeispielen näher erläutert.

Es zeigen:
- Figur 1: eine schematische Darstellung zur Veranschaulichung einer ersten Ausführungsform des erfindungsgemäßen Verfahrens,
- Figur 2: ein Flussdiagramm, das einen möglichen Verfahrensablauf bezogen auf die Darstellung von Figur 1 veranschaulicht,
- Figur 3: eine schematische Darstellung zur Veranschaulichung einer zweiten Ausführungsform des erfindungsgemäßen Verfahrens, und
- Figur 4: ein Flussdiagramm, das einen möglichen Verfahrensablauf bezogen auf die Darstellung von Figur 3 veranschaulicht.

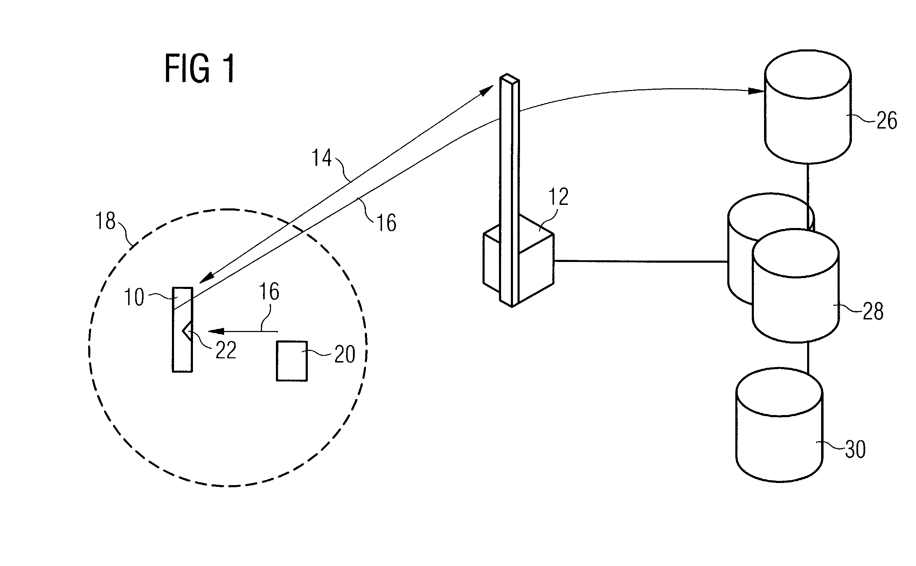

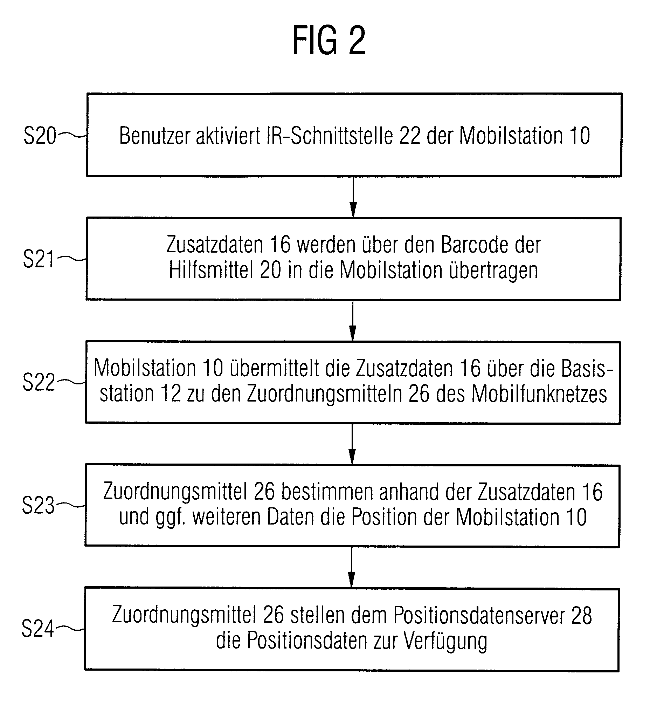

Anhand der Figuren 1 und 2 wird zunächst eine erste Ausführungsform des erfindungsgemäßen Verfahrens erläutert, wobei die Mobilstation 10, die Hilfsmittel 20 und die Basisstation 12 durch die entsprechenden erfindungsgemäßen Vorrichtungen gebildet sein können.

Gemäß der Darstellung von Figur 1 steht eine üblicherweise auch als Base-Transmitter-Station (BTS) bezeichnete Basisstation 12 mit einem Positionsdatenserver 28 in Verbindung, der bei bestimmten Ausführungsformen auch als Gateway-Mobile-Location-Center (GMLC) bezeichnet wird. Der Positionsdatenserver 28 steht mit Zuordnungsmitteln 26 und einem Applikationsserver 30 in Verbindung. Bei den Zuordnungsmitteln 26 kann es sich insbesondere um ein sogenannten Serving-Mobile-Location-Center (SMLC) handeln. Die Zuordnungsmittel 26 sind dazu ausgelegt, anhand von Zusatzdaten 16, die beispielsweise über Funkverbindungen oder leitungsgebundene Verbindungen übermittelt werden, und gegebenenfalls von weiteren Daten, wie beispielsweise der Zellenidentifizierung (Cell-Id) und/oder der zeitlichen Vorverlegung des Sendebursts (Timing Advance TA), eine Mobilstation 10 zu lokalisieren. Die Mobilstation 10 tauscht zur Nutzung von Diensten des Mobilfunknetzes in an sich bekannter Weise Daten 14 mit der Basisstation 12 aus. Hilfsmittel 20 zum Lokalisieren der Mobilstation 10 befinden sich im Bereich 18 der momentanen Position der Mobilstation 10. Für die in Figur 1 dargestellte erste Ausführungsform wird angenommen, dass die Hilfsmittel 20 durch einen Barcodeaufkleber gebildet sind, der beispielsweise im Bereich einer Fahrstuhltür angeordnet sein kann. Die Mobilstation 10 ist mit einer Schnittstelle 22 ausgestattet, bei der es sich in diesem Fall um einen Barcodeleser handelt.

Bezogen auf Figur 2 ergibt sich bei der Anordnung gemäß Figur 1 beispielsweise der folgende Verfahrensablauf. Sofern der Benutzer der Mobilstation 10 dem Mobilfunknetz seine genaue Lokalisierung ermöglichen möchte, scannt er beim Schritt S20 den auf dem Barcodeaufkleber 20 vorgesehenen Barcode mit Hilfe des Barcodelesers 22 der Mobilstation 10. Dabei legt der zum Scannen des Barcodes maximal zulässige Abstand zwischen Mobilstation 10 und Barcodeaufkleber 20 die Größe des Bereichs 18 fest. Die durch den Barcode verschlüsselten Daten bilden in diesem Fall die Zusatzdaten 16, die beispielsweise eine eindeutige Nummer der Hilfsmittel 20 angeben können. Nachdem der Barcode beziehungsweise die Zusatzdaten 16 beim Schritt S20 in die Mobilstation 10 eingelesen wurden, überträgt diese beim Schritt S21 die Zusatzdaten 16 zu der Basisstation 12 des Mobilfunknetzes, von wo sie zu den Zuordnungsmitteln 26 weitergeleitet werden. Die Zuordnungsmittel 26 umfassen eine Datenbank, durch die der durch den Barcode verschlüsselten Nummer eine eindeutige Position zugeordnet werden kann, beispielsweise ein Ort, eine Straße, eine Hausnummer und ein Stockwerk. Diese Positionsinformationen werden beim Schritt S23 von den Zuordnungsmitteln 26 bestimmt. Beim Schritt S24 stellen die Zuordnungsmittel 26 diese Positionsinformationen dem Positionsdatenserver 28 zur Verfügung, auf den der Applikationsserver 30 zugreifen kann. Dabei verfügt der Positionsdatenserver 28 über geeignete Authentifizierungseinrichtungen, um die Vertraulichkeit der Positionsdaten sicherzustellen.

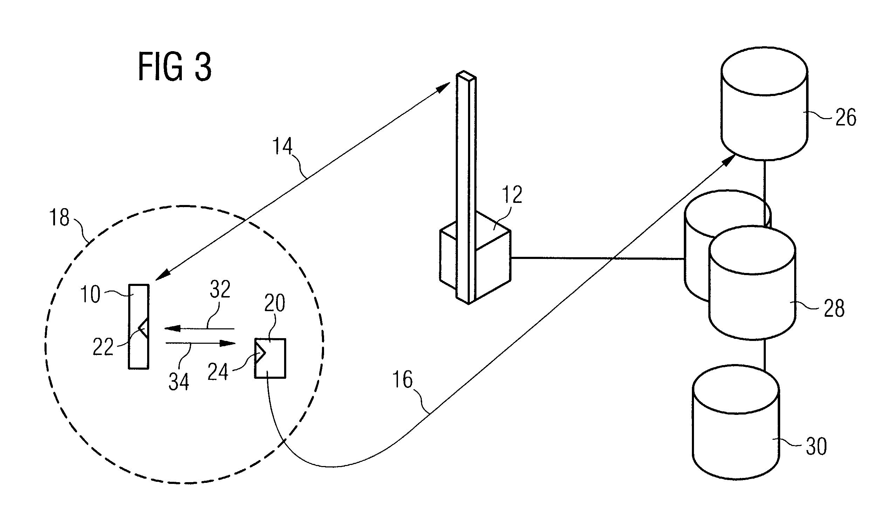

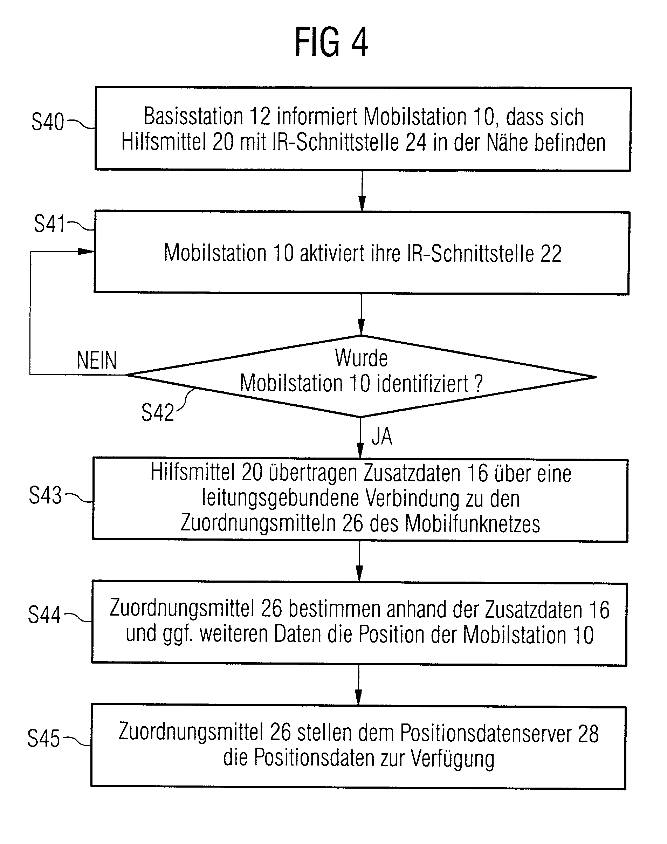

Nachfolgend wird anhand der Figuren 3 und 4 eine zweite Ausführungsform des erfindungsgemäßen Verfahrens erläutert, wobei die Mobilstation 10, die Hilfsmittel 20 und die Basisstation 12 wieder durch die entsprechenden erfindungsgemäßen Vorrichtungen gebildet sein können.

Auch Gemäß der Darstellung von Figur 3 steht eine Basisstation 12 mit einem Positionsdatenserver 28 in Verbindung, bei dem es sich wieder um ein Gateway-Mobile-Location-Center (GMLC) handeln kann. Der Positionsdatenserver 28 steht auch in diesem Fall mit Zuordnungsmittel 26 und einem Applikationsserver 30 in Verbindung. Bei den Zuordnungsmitteln 26 kann es sich wieder um ein Serving-Mobile-Location-Center (SMLC) handeln. Die Zuordnungsmittel 26 sind auch in diesem Fall dazu ausgelegt, anhand von Zusatzdaten 16, die beispielsweise über Funkverbindungen oder leitungsgebundene Verbindungen übermittelt werden, und gegebenenfalls von weiteren Daten, wie beispielsweise der Zellenidentifizierung (Cell-Id) und/oder der zeitlichen Vorverlegung des Sendebursts (Timing Advance TA), eine Mobilstation 10 zu lokalisieren. Die Mobilstation 10 tauscht zur Nutzung von Diensten des Mobilfunknetzes in an sich bekannter Weise Daten 14 mit der Basisstation 12 aus. Hilfsmittel 20 zum Lokalisieren der Mobilstation 10 befinden sich wieder in einem Bereich 18 der momentanen Position der Mobilstation 10. Für die in Figur 3 dargestellte zweite Ausführungsform wird jedoch angenommen, dass die Hilfsmittel 20 eine Infrarot-Schnittstelle 24 aufweisen. Auch die Mobilstation 10 ist in diesem Fall mit einer Infrarot-Schnittstelle 22 ausgestattet. Die Hilfsmittel 20 gemäß Figur 3 sind weiterhin dazu ausgelegt, Zusatzdaten 16 zu dem Mobilfunknetz zu übertragen.

Bezogen auf Figur 4 ergibt sich bei der Anordnung gemäß Figur 3 beispielsweise der folgende Verfahrensablauf. Beim Schritt S40 informiert die Basisstation 12 die Mobilstation 10, dass sich Hilfsmittel 20 mit Infrarot-Schnittstelle 24 in der Nähe befinden. Diese Information wird von der Basisstation 12 zusätzlich zu den Daten 14 übermittelt, deren Austausch die Teilnahme an Diensten des Mobilfunknetzes ermöglicht. Beim Schritt S41 aktiviert die Mobilstation 10 als Reaktion auf die Benachrichtigung durch die Basisstation 12 ihre Infrarot-Schnittstelle 22. Durch die Übertragung von Daten 32 fordern die Hilfsmittel 20 die Mobilstation 10 auf, sich zu identifizieren. Diese Identifizierung erfolgt, indem die Mobilstation 10 Daten 34 zu den Hilfsmitteln 20 überträgt, wobei dieser Datenaustausch über die Infrarot-Schnittstellen 22, 24 erfolgt. Bei der zweiten Ausführungsform wird die Größe des Bereichs 18 durch den maximalen Abstand zwischen Mobilstation 10 und Hilfsmitteln 20 festgelegt, bei dem der Austausch der Daten 32, 34 zwischen der Mobilstation 10 und den Hilfsmitteln 20 noch möglich ist. Beim Einsatz von Infrarot-Schnittstellen 22, 24 beträgt dieser Abstand derzeit üblicherweise einige Meter. Beim Schritt S42 wird überprüft, ob sich die Mobilstation 10 erfolgreich identifiziert hat. Ist dies noch nicht der Fall, wird zum Schritt S41 zurückverzweigt. Anderenfalls wird beim Schritt S43 fortgefahren, bei dem die Hilfsmittel 20 Zusatzdaten 16 über eine leitungsgebundene Verbindung zu den Zuordnungsmitteln 26 des Mobilfunknetzes übertragen. In diesem Fall umfassen die Zusatzdaten 16 die Identität der Mobilstation 10 sowie Angaben, über die die Zuordnungsmittel 26 die Position der Hilfsmittel 20 bestimmen können. Die Hilfsmittel 20 können gegebenenfalls über geeignete Speichereinrichtungen verfügen, um die Zusatzdaten 16 zwischenzuspeichern. Beim Schritt S44 bestimmen die Zuordnungsmittel 26 anhand der Zusatzdaten 16 und gegebenenfalls weiterer Daten die Position der Mobilstation 10. Beim Schritt S45 stellen die Zuordnungsmittel 26 dem Positionsdatenserver 28 die Positionsdaten der Mobilstation 10 zur Verfügung. Die Zusatzdaten können bei dieser wie auch bei allen anderen Ausführungsformen Aktualitätsinformationen, beispielsweise in Form eines Zeitstempels, umfassen, die angeben, wann sich die Mobilstation 10 im Bereich 18 der Hilfsmittel 20 befunden hat.

Die erfindungsgemäße Lösung kann als alleiniges Lokalisierungsverfahren im Mobilfunknetz oder als Ergänzung zu bereits bekannten Lokalisierungsverfahren eingesetzt werden. Die Erfindung ermöglicht unter anderem die Nutzung von standortbezogenen Diensten, bei denen das Stockwerk als Positionsangabe eine wichtige Rolle spielt, was mit bekannten Lokalisierungsverfahren nicht möglich ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren zum Lokalisieren einer Mobilstation (10), die dazu ausgelegt ist, Dienste eines Mobilfunknetzes zu nutzen, indem sie Daten (14) mit zumindest einer Basisstation (12) des Mobilfunknetzes austauscht,
**dadurch gekennzeichnet, dass** zum Lokalisieren der Mobilstation (10) Zusatzdaten (16) herangezogen werden, die ihren Ursprung unabhängig von den Basisstationen (12) im Bereich (18) der momentanen Position der Mobilstation (10) haben.

2. Verfahren nach Anspruch 1,
**dadurch gekennzeichnet, dass** die Zusatzdaten (16) über von den Basisstationen (12) unabhängige ortsfeste Hilfsmittel (20) gewonnen werden.

3. Verfahren nach Anspruch 2,
**dadurch gekennzeichnet, dass** die Hilfsmittel (20) einen Code umfassen.

4. Verfahren nach Anspruch 2 oder 3,
**dadurch gekennzeichnet, dass** die Hilfsmittel (20) und/oder die Mobilstation (10) eine Schnittstelle (22, 24) aufweisen, über die ein Datenaustausch zwischen der Mobilstation (10) und den Hilfsmitteln (20) möglich ist.

5. Verfahren nach Anspruch 4,
**dadurch gekennzeichnet, dass** die Schnittstelle (22, 24) eine Funkschnittstelle, insbesondere eine Bluetooth-Schnittstelle, und/oder eine optische Schnittstelle, insbesondere eine Infrarot-Schnittstelle, und/oder einen Codeleser, insbesondere einen Barcodeleser, und/oder eine Tastatur umfasst.

6. Verfahren nach einem der Ansprüche 2 bis 5,
**dadurch gekennzeichnet, dass** die Mobilstation (10) passive Systeme aufweist, die dazu vorgesehen sind, Hilfsmittel (20) bei einer Annährung zu kontaktieren.

7. Verfahren nach einem der vorhergehenden Ansprüche,
**dadurch gekennzeichnet, dass** die Mobilstation (10) die Zusatzdaten (16) zumindest teilweise an das Mobilfunknetz überträgt.

8. Verfahren nach einem der Ansprüche 2 bis 7,
**dadurch gekennzeichnet, dass** die Hilfsmittel (20) die Zusatzdaten (16) zumindest teilweise an das Mobilfunknetz übertagen.

9. Verfahren nach einem der vorhergehenden Ansprüche,
**dadurch gekennzeichnet, dass** eine oder mehrere Basisstationen (12) Informationen über im Bereich der momentanen Position der Mobilstation (10) vorhandene Hilfsmittel (20) an die Mobilstation (10) übermitteln.

10. Verfahren nach einem der vorhergehenden Ansprüche,
**dadurch gekennzeichnet, dass** die Zusatzdaten (16) Aktualitätsinformationen enthalten.

11. Verfahren nach einem der vorhergehenden Ansprüche,
**dadurch gekennzeichnet, dass** die Zusatzdaten (16) vor der Übermittlung an das Mobilfunknetz zwischengespeichert werden.

12. Verfahren nach einem der vorhergehenden Ansprüche,
**dadurch gekennzeichnet, dass** das Mobilfunknetz Zuordnungsmittel (26) umfasst, die der Mobilstation (10) unter Verwendung der Zusatzdaten (16) eine eindeutige Position zuordnen.

13. Lokalisierbare Mobilstation (10), insbesondere zur Teilnahme an dem Verfahren nach einem der Ansprüche 1 bis 12, die dazu ausgelegt ist, Dienste eines Mobilfunknetzes zu nutzen, indem sie Daten (14) mit zumindest einer Basisstation (12) des Mobilfunknetzes austauscht, wobei die Position der Mobilstation (10) von dem Mobilfunknetz zugeordneten Zuordnungsmitteln (26) anhand von Zusatzdaten (16) bestimmt werden kann,
**dadurch gekennzeichnet, dass** sie eine Schnittstelle (22) aufweist, über die ihr Zusatzdaten (16) zugeführt werden können, die ihren Ursprung unabhängig von den Basisstationen (12) im Bereich (18) der momentanen Position der Mobilstation (10) haben, und/oder über die zur Gewinnung der Zusatzdaten (16) ein Datenaustausch (33, 34) mit von den Basisstationen (12) unabhängigen ortsfesten Hilfsmitteln (20) möglich ist, die im Bereich (18) der momentanen Position der Mobilstation (10) vorgesehen sind.

14. Lokalisierbare Mobilstation nach Anspruch 13,
**dadurch gekennzeichnet, dass** die Schnittstelle (22) eine Funkschnittstelle, insbesondere eine Bluetooth-Schnittstelle, und/oder eine optische Schnittstelle, insbesondere eine Infrarot-Schnittstelle, und/oder einen Codeleser, insbesondere einen Barcodeleser, und/oder eine Tastatur umfasst.

15. Lokalisierbare Mobilstation nach Anspruch 13 oder 14,
**dadurch gekennzeichnet, dass** sie passive Systeme aufweist, die dazu vorgesehen sind, Hilfsmittel (20) bei einer Annährung zu kontaktieren.

16. Hilfsmittel (20), insbesondere zur Teilnahme an dem Verfahren nach einem der Ansprüche 1 bis 12, zum Lokalisieren von Mobilstationen (10), die dazu ausgelegt sind, Dienste eines Mobilfunknetzes zu nutzen, indem sie Daten (14) mit zumindest einer Basisstation (12) des Mobilfunknetzes austauschen,
**dadurch gekennzeichnet, dass** die Hilfsmittel (20) dazu vorgesehen sind, stationär im Bereich (18) von potentiellen Aufenthaltsorten von Mobilstationen (10) angeordnet zu werden, und dass sie von einem Datenaustausch (14) zwischen der Mobilstation (10) und einer Basisstation (12) unabhängige Zusatzdaten (16) liefern, die dazu vorgesehen sind, zur Lokalisierung einer Mobilstation (10) herangezogen zu werden.

17. Hilfsmittel (20) nach Anspruch 16,
**dadurch gekennzeichnet, dass** sie eine Schnittstelle (24) aufweisen, die dazu vorgesehen ist, Daten (16, 32, 34) mit Mobilstationen (10) auszutauschen.

18. Hilfsmittel (20) nach Anspruch 17,
**dadurch gekennzeichnet, dass** die Schnittstelle (24) eine Funkschnittstelle, insbesondere eine Bluetooth-Schnittstelle, und/oder eine optische Schnittstelle, insbesondere eine Infrarot-Schnittstelle, umfasst.

19. Hilfsmittel (20) nach einem der Ansprüche 16 bis 18,
**dadurch gekennzeichnet, dass** sie dazu ausgelegt sind, die Zusatzdaten (16) an ein Mobilfunknetz zu übermitteln.

20. Basisstation (12) für ein Mobilfunknetz, insbesondere zur Teilnahme an dem Verfahren nach einem der Ansprüche 1 bis 12,
**dadurch gekennzeichnet, dass** sie dazu ausgelegt ist, Informationen über in ihrem Sende-/Empfangsbereich angeordnete Hilfsmittel (20) nach einem der Ansprüche 16 bis 19 an Mobilstationen (10) zu übermitteln, die sich in ihrem Sende-/Empfangsbereich befinden.
